# EUROPEAN PATENT SPECIFICATION

(11) **EP 4 134 937 B1**
(45) Date of publication and mention of the grant of the patent: **21.02.2024**
(21) Application number: 20929839.7
(22) Date of filing: 17.09.2020
(51) Int. Cl.: G09G 3/00, H04B 1/38, B44F 7/00

(54) **ROTATING DISPLAY APPARATUS BASED ON DUAL CIRCULARLY POLARIZED BIDIRECTIONAL DATA TRANSMISSION MODULES**
ROTIERENDE ANZEIGEVORRICHTUNG AUF BASIS VON DOPPELTEN ZIRKULAR POLARISIERTEN BIDIREKTIONALEN DATENÜBERTRAGUNGSMODULEN
APPAREIL D'AFFICHAGE ROTATIF BASÉ SUR DES MODULES DE TRANSMISSION DE DONNÉES BIDIRECTIONNELS À POLARISATION CIRCULAIRE DOUBLE

(30) Priority: 10.04.2020 CN 202010279701
(43) Date of publication of application: 15.02.2023
(73) Proprietor: Nanjing Dseelab Digital Technology Co., Ltd., Nanjing, Jiangsu 210000 (CN)
(72) Inventor: LUO, Hongfei, Nanjing, Jiangsu 210000 (CN); ZHOU, Quan, Nanjing, Jiangsu 210000 (CN); HU, Hang, Nanjing, Jiangsu 210000 (CN)
(74) Representative: RPK Patentanwälte Reinhardt und Kaufmann Partnerschaft mbB
(86) International application number: PCT/CN2020/115995
(87) International publication number: WO 2021/203627

(56) References cited:
- WO-A1-2006/021788
- WO-A1-2011/095425
- CN-A- 103 022 730
- CN-A- 103 247 858
- CN-A- 104 932 241
- CN-A- 106 016 155
- CN-A- 106 684 540
- CN-A- 107 979 734
- CN-A- 109 143 376
- CN-A- 111 276 078
- CN-U- 205 176 504
- CN-U- 209 119 368

## Description

### Cross-reference to Related Applications

The present disclosure claims priority to Chinese Patent Application No. CN202010279701.9, entitled "Rotating Display Apparatus Based on Dual Circularly Polarized Bidirectional Data Transmission Modules", filed with China National Intellectual Property Administration on April 10, 2020.

### Technical Field

The present disclosure relates to the field of rotating display, and particularly to a rotating display apparatus based on dual circularly polarized bidirectional data transmission modules.

### Background Art

Rotating display devices become more and more popular in the current society, and many shopping malls, airports, and service areas are equipped with the rotating display devices for commercial promotion. The rotating display device cannot be directly connected to a data cable to display video material due to the rotating characteristic, and therefore, in most applications of the rotating display device, the video material is stored in an SD card on the rotating display device in advance, and then read from the SD card by a control board in the rotating display device, so as to achieve the purpose of displaying the video material. In this way, it will lead to problems of limited display scenarios of rotating display device, and it is difficult to meet the high-speed data transmission displaying requirement, and therefore, the rotating display device is still required to be improved.

The documents WO2006/021788A1 and CN107979734A show related prior art.

### Summary

An object of the present disclosure is to provide a rotating display apparatus based on dual circularly polarized bidirectional data transmission modules, which solves the problem that some rotating display devices cannot display high-speed data transmission content.

The present disclosure provides a rotating display apparatus based on dual circularly polarized bidirectional data transmission modules, comprising a base board, a motor, a main control board, and an LED light board; wherein a pair of dual circularly polarized bidirectional data transmission modules are arranged on the base board and the main control board, each of the dual circularly polarized bidirectional data transmission modules comprises a millimeter wave modulation-demodulation transceiver, a substrate integrated waveguide 90 degree electric bridge, orthogonal half mode waveguide excitation gaps, and an orthogonal mode combined waveguide circularly polarized radiator; wherein the substrate integrated waveguide 90 degree electric bridge is connected with the millimeter wave modulation-demodulation transceiver, the orthogonal half mode waveguide excitation gaps are connected with the substrate integrated waveguide 90 degree electric bridge and the orthogonal mode combined waveguide circularly polarized radiator is connected with the orthogonal half mode waveguide excitation gaps.

Optionally, as a possible embodiment, the millimeter wave modulation-demodulation transceiver includes a transmitting circuit and a receiving circuit, the transmitting circuit is configured to modulate a high-speed baseband digital signal into a millimeter wave digital signal and transmit the millimeter wave digital signal to the substrate integrated waveguide 90 degree electric bridge; the receiving circuit is configured to receive a millimeter wave digital signal output by the substrate integrated waveguide 90 degree electric bridge and demodulate the millimeter wave digital signal into a high-speed baseband digital signal.

Optionally, as a possible embodiment, the transmitting circuit is configured to perform a frequency mixing processing on the input high-speed baseband digital signal by means of ASK modulation, so as to modulate the digital signal onto a millimeter wave carrier to obtain the millimeter wave digital signal.

Optionally, as a possible embodiment, the transmitting circuit is configured to receive an input differential high-speed baseband digital signal with a transmission rate of 0-5Gbps.

Optionally, as a possible embodiment, the receiving circuit is configured to demodulate the received millimeter wave digital modulation signal through incoherent envelope detection and comparison, so as to obtain the high-speed baseband digital signal.

Optionally, as a possible embodiment, the pair of dual circularly polarized bidirectional data transmission modules include two dual circularly polarized bidirectional data transmission modules, and the two dual circularly polarized bidirectional data transmission modules are arranged on the base board and the main control board respectively.

Optionally, as a possible embodiment, the two dual circularly polarized bidirectional data transmission modules have the same structure.

Optionally, as a possible embodiment, the substrate integrated waveguide 90 degree electric bridge included in the dual circularly polarized bidirectional data transmission module on the base board is integrated on the base board based on a printed circuit board process, and the substrate integrated waveguide 90 degree electric bridge included in the dual circularly polarized bidirectional data transmission module on the main control board is integrated on the main control board based on a printed circuit board process. Optionally, as a possible embodiment, the substrate integrated waveguide 90 degree electric bridge includes upper-and-lower-layer metal, a high-frequency dielectric slab, and metallized through holes, the upper-and-lower-layer metal covers both sides of the high-frequency dielectric slab, and the metallized through holes are provided in an entirety formed by the upper-and-lower-layer metal and the high-frequency dielectric slab.

Optionally, as a possible embodiment, two ports of the substrate integrated waveguide 90 degree electric bridge are connected with the millimeter wave modulation-demodulation transceiver through microstrip transmission lines.

Optionally, as a possible embodiment, open narrow gaps are provided in the end of the substrate integrated waveguide 90 degree electric bridge, and the open narrow gaps have an included angle of 90 degrees.

Optionally, as a possible embodiment, the orthogonal half mode waveguide excitation gaps and the orthogonal mode combined waveguide circularly polarized radiator have an integrated metal structure, and the metal structure is fixed above the substrate integrated waveguide 90 degree electric bridge.

Optionally, as a possible embodiment, the orthogonal half mode waveguide excitation gaps and the orthogonal mode combined waveguide circularly polarized radiator form an integrated metal structure, and the metal structure is pressed on a printed circuit board where the substrate integrated waveguide 90 degree electric bridge is located.

Optionally, as a possible embodiment, the orthogonal mode combined waveguide circularly polarized radiator is located at the rotation center of the rotating display apparatus.

Optionally, as a possible embodiment, a through hole is provided in the motor, and the pair of dual circularly polarized bidirectional data transmission modules pass through the motor via the through hole.

### Brief Description of Drawings

To describe the technical solutions in the embodiments of the present disclosure more clearly, the following briefly describes the accompanying drawings required for the embodiments. Apparently, the accompanying drawings in the following description show merely some embodiments of the present disclosure, and a person of ordinary skill in the art may still derive other drawings from these accompanying drawings without creative efforts. The above and other objects, features and advantages of the present disclosure will become more apparent from the accompanying drawings. The same reference numerals refer to the same parts throughout the drawings. The drawings are not intentionally drawn to scale, the emphasis is placed on illustrating the subject matter of the present disclosure.
FIG. 1 is a schematic structural diagram of a rotating display apparatus provided in the present disclosure.
FIG. 2 is a schematic structural diagram of a base board provided in the present disclosure.
FIG. 3 is a schematic structural diagram of a main control board provided in the present disclosure.
FIG. 4 is a schematic circuit diagram of a dual circularly polarized bidirectional data transmission module provided in the present disclosure.
FIG. 5 is a top view of the dual circularly polarized bidirectional data transmission module provided in the present disclosure.
FIG. 6 is a side view of the dual circularly polarized bidirectional data transmission module provided in the present disclosure.
FIG. 7 is a perspective view of the dual circularly polarized bidirectional data transmission module provided in the present disclosure.
FIG. 8 is a schematic diagram of a frequency response curve of the reflection coefficient S11 of an antenna port provided in the present disclosure.

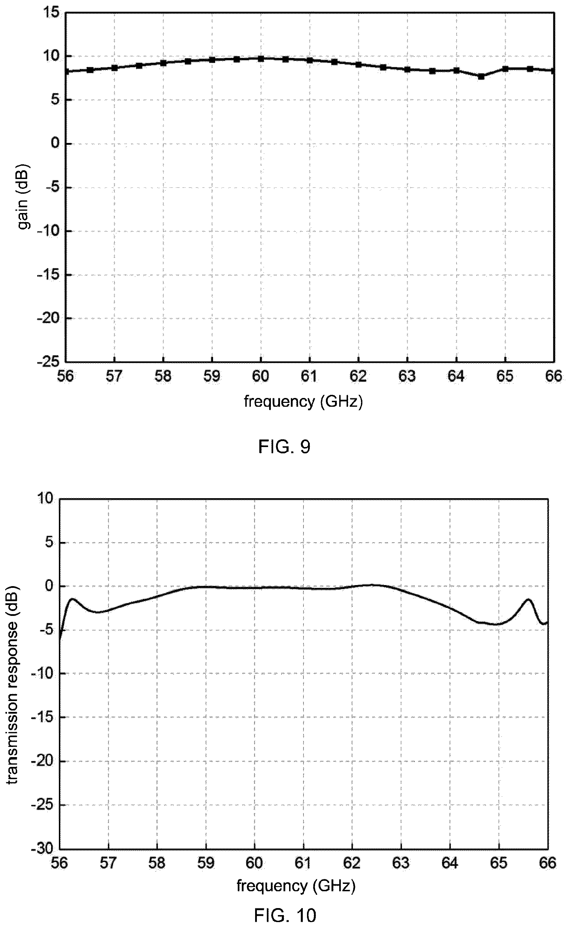

FIG. 9 is a schematic diagram of a frequency response curve of an antenna gain provided in the present disclosure.
FIG. 10 is a schematic diagram of a normalized transmission frequency response curve of inter-module transceiving and mutual transmission provided in the present disclosure.

Reference numerals: 1-millimeter wave modulation-demodulation transceiver; 2-substrate integrated waveguide 90 degree electric bridge; 3-orthogonal half mode waveguide excitation gap; 4-orthogonal mode combined waveguide circularly polarized radiator; 5-high-frequency dielectric slab; 6-metallized through hole; 7-microstrip transmission line; 8-upper-and-lower-layer metal; 9-open narrow gap; 10-dual circularly polarized bidirectional data transmission module; 11-dual circularly polarized bidirectional data transmission module; 20-base board; 21-motor; 22-main control board; 23-LED light board.

### Detailed Description

To make the objectives, technical solutions and advantages of the embodiments of the present disclosure clearer, the technical solutions in the embodiments of the present disclosure are clearly and completely described with reference to the accompanying drawings in the embodiments of the present disclosure, and apparently, the described embodiments are not all but a part of the embodiments of the present disclosure. All other embodiments obtained by a person of ordinary skill in the art based on the embodiments of the present disclosure without creative efforts shall fall within the protection scope of the present disclosure. Accordingly, the following detailed description of the embodiments of the present disclosure provided in the drawings is not intended to limit the scope of protection of the present disclosure, but only represents the selected embodiments of the present disclosure. All other embodiments obtained by a person of ordinary skill in the art based on the embodiments of the present disclosure without creative efforts shall fall within the protection scope of the present disclosure.

In descriptions of the present disclosure, it should be understood that, orientations or positional relationships indicated by terms "center", "length", "width", "thickness", "upper", "lower", "front", "rear", "left", "right", "inner", "outer" etc. are based on orientations or positional relationships shown in the accompanying drawings, and they are used only for ease of describing the present disclosure and simplifying the description, but do not indicate or imply that an indicated device or element must have a specific orientation or be constructed and operated in a specific orientation. Therefore, they cannot be understood as a limitation on the present disclosure.

In addition, the terms such as "first" and "second" are used herein only for purposes of description and are not intended to indicate or imply relative importance or to imply the number of indicated technical features. Thus, the feature defined with "first", "second", or the like, may include one or more of these features explicitly or implicitly. In the description of the present disclosure, "a plurality of" means two or more, unless expressly specified otherwise.

In the present disclosure, unless specified or limited otherwise, the terms "mounted", "connected", "coupled", and "fixed" and the like are used broadly, and may be, for example, fixed connections, detachable connections, or integral connections; may also be direct connections or indirect connections via intervening structures; may also be communication inside two elements or an interaction relationship of two elements. The above terms can be understood by those skilled in the art according to specific situations.

In the present disclosure, unless specified or limited otherwise, a structure in which a first feature is "on" or "below" a second feature may include a situation in which the first feature is in direct contact with the second feature, and may also include a situation in which the first feature and the second feature are not in direct contact but are contacted via an additional feature therebetween. Furthermore, a first feature "on," "above," or "on top of" a second feature may include a situation in which the first feature is directly and obliquely "on," "above," or "on top of" the second feature, or just means that the first feature is at a height higher than that of the second feature; while a first feature "below," "under," or "on bottom of" a second feature may include a situation in which the first feature is directly and obliquely "below," "under," or "on bottom of" the second feature, or just means that the first feature is at a height lower than that of the second feature.

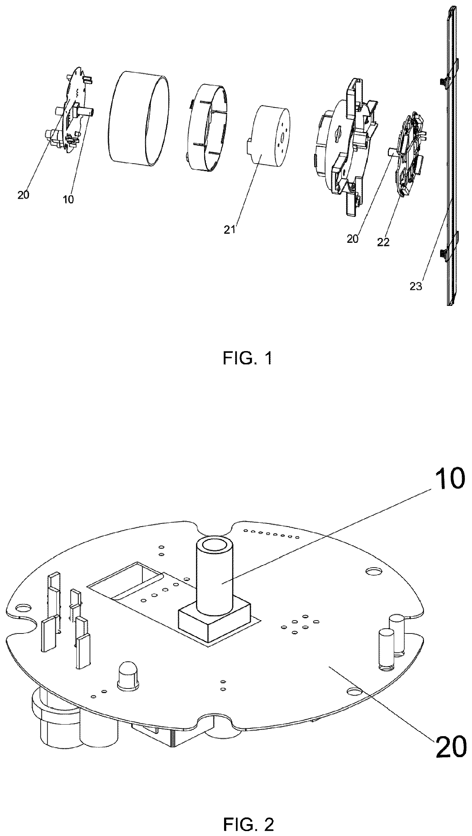

As shown in FIG. 1, an embodiment of the present disclosure provides a rotating display apparatus based on dual circularly polarized bidirectional data transmission modules. Wherein, the rotating display apparatus may include a base board 20, a motor 21, a main control board 22 and an LED light board 23.

In detail, the motor 21 may be provided on the base board 20. The base board 20 may drive the motor 21 to rotate by a drive circuit, and the base board 20 may supply power to the main control board 22 in various ways, such as by a wireless power supply coil, a brush, or the like. The motor 21 may drive the main control board 22 and the LED light board 23 to rotate. The main control board 22 may be configured to drive the LED light board 23 to perform displaying. A pair of dual circularly polarized bidirectional data transmission modules may be arranged on the base board 20 and the main control board 22.

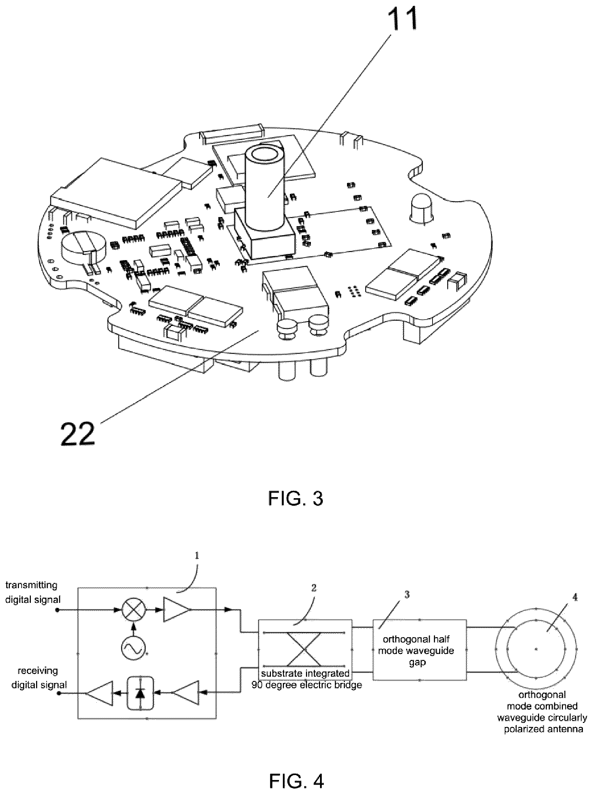

Referring to FIGS. 2 and 3, a dual circularly polarized bidirectional data transmission module 10 may be provided on the base board 20, and a dual circularly polarized bidirectional data transmission module 11 may be provided on the main control board 22. Wherein, the dual circularly polarized bidirectional data transmission module 10 and the dual circularly polarized bidirectional data transmission module 11 are not the same dual circularly polarized bidirectional data transmission module.

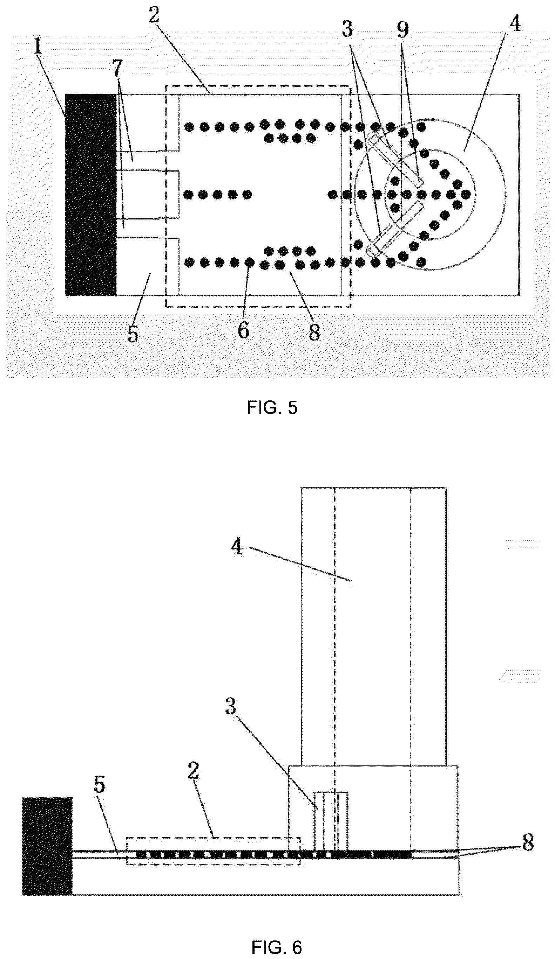

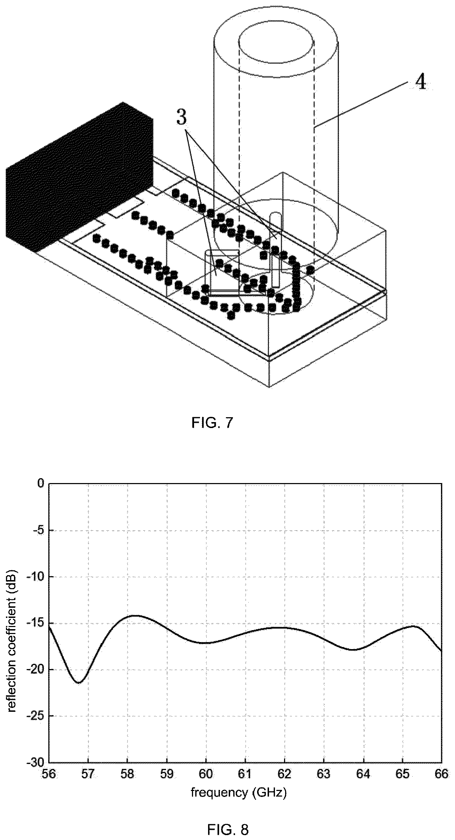

Referring to FIGS. 5 to 7, in an alternative example, the dual circularly polarized bidirectional data transmission module 10 and the dual circularly polarized bidirectional data transmission module 11 may have consistent structures. In other examples, the dual circularly polarized bidirectional data transmission module 10 and the dual circularly polarized bidirectional data transmission module 11 may also have inconsistent structures.

Optionally, in an example, the dual circularly polarized bidirectional data transmission module 10 or the dual circularly polarized bidirectional data transmission module 11 may structurally include a millimeter wave modulation-demodulation transceiver 1, a substrate integrated waveguide 90 degree electric bridge 2, orthogonal half mode waveguide excitation gaps 3, and an orthogonal mode combined waveguide circularly polarized radiator 4.

Optionally, in an example, the millimeter wave modulation-demodulation transceiver 1, the substrate integrated waveguide 90 degree electric bridge 2, the orthogonal half mode waveguide excitation gaps 3, and the orthogonal mode combined waveguide circularly polarized radiator 4 may be sequentially set up on a circuit board, and a millimeter wave transceiver signal port of the millimeter wave modulation-demodulation transceiver 1 may be connected with a port of the substrate integrated waveguide 90 degree electric bridge 2.

Wherein, the millimeter wave modulation-demodulation transceiver 1 may include a transmitting circuit and a receiving circuit.

Based on this, the transmitting circuit of the millimeter wave modulation-demodulation transceiver 1 may perform a frequency mixing processing on an input differential high-speed baseband digital signal, so as to modulate the digital signal onto a millimeter wave carrier for signal transmission, such as to transmit to the substrate integrated waveguide 90 degree electric bridge 2.

Wherein, in an example, the transmission rate of the above-mentioned differential high-speed baseband digital signal may be 0-5Gbps. The frequency mixing processing may refer to performing a frequency mixing processing with an internal local oscillator by means of amplitude shift keying (ASK) modulation. The millimeter wave carrier may have a frequency of 60GHz.

The receiving circuit of the millimeter wave modulation-demodulation transceiver 1 may perform a demodulate processing on a received millimeter wave digital modulation signal, such as a millimeter wave digital modulation signal output by the substrate integrated waveguide 90 degree electric bridge 2, through incoherent envelope detection and comparison, and may output a baseband digital signal obtained by the demodulation processing in the form of a differential level.

It should be noted that, for the transmitting circuit and the receiving circuit included in the millimeter wave modulation-demodulation transceiver 1, on the one hand, the millimeter wave modulation signal transmitted by the transmitting circuit of the millimeter wave modulation-demodulation transceiver 1, for example, the millimeter wave modulation signal transmitted to the substrate integrated waveguide 90 degree electric bridge 2, may be distributed by the substrate integrated waveguide 90 degree electric bridge 2, so as to obtain two transmitting signals with equal amplitude and a 90-degree phase difference. Wherein, in a circular waveguide, the aforementioned two transmitting signals may be synthesized into right hand circular polarization (RHCP, in which the electric field vector rotates clockwise as viewed along the propagation direction of a wave) through two orthogonal TE11 modes.

On the other Hand, the millimeter wave modulation signal received by the receiving circuit of the millimeter wave modulation-demodulation transceiver 1, such as the millimeter wave digital modulation signal output by the substrate integrated waveguide 90 degree electric bridge 2, may be synthesized at a receiving port of the receiving circuit of the millimeter wave modulation-demodulation transceiver 1 through the substrate integrated waveguide 90 degree electric bridge 2 in a left hand circular polarization (LHCP, in which the electric field vector rotates counterclockwise as viewed along the propagation direction of the wave) mode.

Optionally, in an example, the substrate integrated waveguide 90 degree electric bridge 2, the orthogonal half mode waveguide excitation gaps 3, and the orthogonal mode combined waveguide circularly polarized radiator 4 may constitute a dual circularly polarized bidirectional data transmission apparatus, and a circularly polarized antenna part of the dual circularly polarized bidirectional data transmission apparatus and the substrate integrated waveguide 90 degree electric bridge 2 may be implemented using a printed circuit board process, thus facilitating interconnection with the millimeter wave modulation-demodulation transceiver 1 and integration on the base board 20 and the main control board 22.

For example, with regard to the substrate integrated waveguide 90 degree electric bridge 2: the substrate integrated waveguide 90 degree electric bridge 2 included in the dual circularly polarized bidirectional data transmission module 10 on the base board 20 may be integrated on the base board 20 based on a printed circuit board process; the substrate integrated waveguide 90 degree electric bridge 2 included in the dual circularly polarized bidirectional data transmission module 11 on the main control board 22 may also be integrated on the main control board 22 based on a printed circuit board process.

Optionally, in an example, the substrate integrated waveguide 90 degree electric bridge 2 may include a high-frequency dielectric slab 5, upper-and-lower-level metal 8, and metallized through holes 6. On the one hand, two ports of the substrate integrated waveguide 90 degree electric bridge 2 may be directly connected with the millimeter wave modulation-demodulation transceiver 1 through microstrip transmission lines 7, and on the other hand, the other two ports of the substrate integrated waveguide 90 degree electric bridge 2 may excite a group of perpendicular orthogonal half mode waveguide excitation gaps 3 through open narrow gaps 9.

Optionally, in an example, the open narrow gaps 9 may be located at the end of the substrate integrated waveguide 90 degree electric bridge 2, and may have an included angle of 90 degrees, and the orthogonal half mode waveguide excitation gaps 3 may be located above the open narrow gaps 9.

Wherein, in other examples, the included angle of the open narrow gaps 9 may be other angles, and the orthogonal half mode waveguide excitation gaps 3 may be located in other directions of the open narrow gaps 9.

Optionally, in an example, the orthogonal half mode waveguide excitation gaps 3 and the orthogonal mode combined waveguide circularly polarized radiator 4 may be machined using an integrated metal structure, and the machined integrated metal structure may be directly pressed on a printed circuit board where the substrate integrated waveguide 90 degree electric bridge 2 is located, or may be fixed above the substrate integrated waveguide 90 degree electrical bridge 2.

Optionally, in an example, there exists a TE11 mode of polarization degenerate rotation within the circular waveguide of the waveguide circularly polarized radiator 4. In detail, the two perpendicular half mode waveguide excitation gaps may form two orthogonal TE11 mode electromagnetic fields within the orthogonal mode combined waveguide circularly polarized radiator 4, thus achieving good isolation characteristics.

Wherein the 90-degree phase shift of the excited signal by the substrate integrated waveguide 90 degree electric bridge 2 makes the two orthogonal TE11 mode electromagnetic fields to have a phase difference of 90 degrees, thereby forming a left hand circular polarization wave or a right hand circular polarization wave.

For example, on the one hand, the millimeter wave modulation signal transmitted by the transmitting circuit of the millimeter wave modulation-demodulation transceiver 1 may pass through the substrate integrated waveguide 90 degree electric bridge 2, then be synthesized into the right hand circular polarization within the circular waveguide through the orthogonal TE11 modes, and then be radiated into a space through openings at the end of the waveguide circularly polarized radiator 4; on the other hand, field phases of the left hand circular polarization signal received by the receiving circuit of the millimeter wave modulation-demodulation transceiver 1 at the two half mode waveguide gaps may have a difference of 90 degrees, and inphase synthesis may be realized at the receiving port of the substrate integrated waveguide 90 degree electric bridge 2.

It may be understood that, for the transmission and reception of the signals on the millimeter wave modulation-demodulation transceiver 1, on the one hand, separate ports and different polarizations may be used to realize bidirectional transmission; on the other hand, two different polarizations may share the aperture of the orthogonal mode combined waveguide circularly polarized radiator 4.

Referring to FIG. 1, the dual circularly polarized bidirectional data transmission module 10 and the dual circularly polarized bidirectional data transmission module 11 are arranged on the base board 20 and the main control board 22, and the orthogonal mode combined waveguide circularly polarized radiator 4 may be provided at the rotation center of the rotating display apparatus, such that the dual circularly polarized bidirectional data transmission module 10 and the dual circularly polarized bidirectional data transmission module 11 may maintain a stable data transmission. Moreover, the motor 21 may be provided with through holes, such that the dual circularly polarized bidirectional data transmission module 10 and the dual circularly polarized bidirectional data transmission module 11 may pass through the motor 21 via the through holes, thus reducing the volume of the rotating display apparatus.

FIGS. 5 to 7 show the port reflection, gain curve and transmission response of the dual circularly polarized bidirectional data transmission module, and the result shows that the 1 dB bandwidth of module transmission reaches 5GHz, and the 3dB bandwidth thereof exceeds 6.5GHz.

Based on the above description, it may be known that, in the rotating display apparatus based on the dual circularly polarized bidirectional data transmission modules provided in the present disclosure, by arranging a pair of dual circularly polarized bidirectional data transmission modules on the base board 20 and the main control board 22, high-speed communication between the base board 20 and the main control board 22 is realized, and especially when high-speed data transmission content is required to be displayed, more stable transmission and display effects may be achieved.

### Industrial applicability

A pair of dual circularly polarized bidirectional data transmission modules are arranged on the base board and the main control board of the rotating display apparatus according to the present disclosure, such that high-speed digital signals may be bidirectionally transmitted between the base board and the main control board, thus improving the display effect of the rotating display apparatus, and achieving more stable transmission and display effects.

In addition, by providing through holes in the motor, the dual circularly polarized bidirectional data transmission modules may pass through the motor, thus reducing the volume of the rotating display apparatus.

## Claims

1. A rotating display apparatus based on dual circularly polarized bidirectional data transmission modules, comprising a base board (20), a motor (21), a main control board (22), and an LED light board (23), wherein a pair of dual circularly polarized bidirectional data transmission modules (10, 11) are arranged on the base board (20) and the main control board (22), and each of the dual circularly polarized bidirectional data transmission modules (10, 11) comprises a millimeter wave modulation-demodulation transceiver (1), a substrate integrated waveguide 90 degree electric bridge (2), orthogonal half mode waveguide excitation gaps (3), and an orthogonal mode combined waveguide circularly polarized radiator (4); and
the substrate integrated waveguide 90 degree electric bridge (2) is connected to the millimeter wave modulation-demodulation transceiver (1), the orthogonal half mode waveguide excitation gaps (3) are connected to the substrate integrated waveguide 90 degree electric bridge (2), and the orthogonal mode combined waveguide circularly polarized radiator (4) is connected to the orthogonal half mode waveguide excitation gaps (3).

2. The rotating display apparatus based on dual circularly polarized bidirectional data transmission modules according to claim 1, wherein the millimeter wave modulation-demodulation transceiver (1) comprises a transmitting circuit and a receiving circuit;
the transmitting circuit is configured to modulate a high-speed baseband digital signal into a millimeter wave digital signal and transmit the millimeter wave digital signal to the substrate integrated waveguide 90 degree electric bridge (2); and
the receiving circuit is configured to receive a millimeter wave digital signal output by the substrate integrated waveguide 90 degree electric bridge (2) and demodulate the millimeter wave digital signal into a high-speed baseband digital signal.

3. The rotating display apparatus based on dual circularly polarized bidirectional data transmission modules according to claim 2, wherein the transmitting circuit is configured to perform a frequency mixing processing on the input high-speed baseband digital signal by means of ASK modulation, so as to modulate the digital signal onto a millimeter wave carrier to obtain the millimeter wave digital signal.

4. The rotating display apparatus based on dual circularly polarized bidirectional data transmission modules according to claim 3, wherein the transmitting circuit is configured to receive an input differential high-speed baseband digital signal with a transmission rate of 0-5Gbps.

5. The rotating display apparatus based on dual circularly polarized bidirectional data transmission modules according to claim 2, wherein the receiving circuit is configured to perform a demodulating processing on the received millimeter wave digital modulation signal through incoherent envelope detection and comparison, so as to obtain the high-speed baseband digital signal.

6. The rotating display apparatus based on dual circularly polarized bidirectional data transmission modules according to any one of claims 1 to 5, wherein the pair of dual circularly polarized bidirectional data transmission modules (10, 11) comprise two dual circularly polarized bidirectional data transmission modules (10, 11), and the two dual circularly polarized bidirectional data transmission modules (10, 11) are arranged on the base board (20) and the main control board (20) respectively.

7. The rotating display apparatus based on dual circularly polarized bidirectional data transmission modules according to claim 6, wherein the two dual circularly polarized bidirectional data transmission modules (10, 11) are of a same structure.

8. The rotating display apparatus based on dual circularly polarized bidirectional data transmission modules according to claim 6, wherein the substrate integrated waveguide 90 degree electric bridge (2) comprised in the dual circularly polarized bidirectional data transmission module (10) on the base board (20) is integrated on the base board (20) based on a printed circuit board process; and
the substrate integrated waveguide 90 degree electric bridge (2) comprised in the dual circularly polarized bidirectional data transmission module (11) on the main control board (22) is integrated on the main control board (22) based on a printed circuit board process.

9. The rotating display apparatus based on dual circularly polarized bidirectional data transmission modules according to any one of claims 1 to 8, wherein the substrate integrated waveguide 90 degree electric bridge (2) comprises upper-and-lower-layer metal (8), a high-frequency dielectric slab (5), and metallized through holes (6), the upper-and-lower-layer metal (8) covers both sides of the high-frequency dielectric slab (5), and the metallized through holes (6) are provided in an entirety formed by the upper-and-lower-layer metal (8) and the high-frequency dielectric slab (5).

10. The rotating display apparatus based on dual circularly polarized bidirectional data transmission modules according to any one of claims 1 to 9, wherein two ports of the substrate integrated waveguide 90 degree electric bridge (2) are connected to the millimeter wave modulation-demodulation transceiver (1) through microstrip transmission lines (7).

11. The rotating display apparatus based on dual circularly polarized bidirectional data transmission modules according to any one of claims 1 to 10, wherein open narrow gaps (9) are provided in an end of the substrate integrated waveguide 90 degree electric bridge (2), and the open narrow gaps (9) have an included angle of 90 degrees.

12. The rotating display apparatus based on dual circularly polarized bidirectional data transmission modules according to any one of claims 1 to 11, wherein the orthogonal half mode waveguide excitation gaps (3) and the orthogonal mode combined waveguide circularly polarized radiator (4) form an integrated metal structure, and the metal structure is fixed above the substrate integrated waveguide 90 degree electric bridge (2).

13. The rotating display apparatus based on dual circularly polarized bidirectional data transmission modules according to any one of claims 1 to 11, wherein the orthogonal half mode waveguide excitation gaps (3) and the orthogonal mode combined waveguide circularly polarized radiator (4) form an integrated metal structure, and the metal structure is pressed on a printed circuit board where the substrate integrated waveguide 90 degree electric bridge (2) is located.

14. The rotating display apparatus based on dual circularly polarized bidirectional data transmission modules according to any one of claims 1 to 13, wherein the orthogonal mode combined waveguide circularly polarized radiator (4) is located at a rotation center of the rotating display apparatus.

15. The rotating display apparatus based on dual circularly polarized bidirectional data transmission modules according to any one of claims 1 to 14, wherein through holes are provided in the motor (21), and the pair of dual circularly polarized bidirectional data transmission modules (10, 11) pass through the motor (21) via the through holes.

## Patentansprüche

1. Rotierende Anzeigeeinrichtung basierend auf doppelten zirkular polarisierten bidirektionalen Datenübertragungsmodulen, umfassend eine Grundplatte (20), einen Motor (21), eine Hauptsteuerplatte (22) und eine LED-Lichtplatte (23), wobei ein Paar von doppelten zirkular polarisierten bidirektionalen Datenübertragungsmodulen (10, 11) auf der Grundplatte (20) und der Hauptsteuerplatte (22) eingerichtet ist und jedes der doppelten zirkular polarisierten bidirektionalen Datenübertragungsmodule (10, 11) einen Millimeterwellen-Modulations-Demodulations-Transceiver (1), eine elektrische 90 Grad-Brücke mit in einem Substrat integrierten Wellenleiter (2), Anregungslücken mit orthogonalem Halbmodenwellenleiter (3) und einen zirkular polarisierten Radiator mit kombiniertem Wellenleiter mit orthogonaler Mode (4) umfasst; und
die elektrische 90 Grad-Brücke mit in einem Substrat integrierten Wellenleiter (2) mit dem Millimeterwellen-Modulations-Demodulations-Transceiver (1) verbunden ist, die Anregungslücken mit orthogonalem Halbmodenwellenleiter (3) mit der elektrischen 90 Grad-Brücke mit in einem Substrat integrierten Wellenleiter (2) verbunden sind und der zirkular polarisierte Radiator mit kombiniertem Wellenleiter mit orthogonaler Mode (4) mit den Anregungslücken mit orthogonalem Halbmodenwellenleiter (3) verbunden ist.

2. Rotierende Anzeigeeinrichtung basierend auf doppelten zirkular polarisierten bidirektionalen Datenübertragungsmodulen nach Anspruch 1, wobei der Millimeterwellen-Modulations-Demodulations-Transceiver (1) eine Übertragungsschaltung und eine Empfangsschaltung umfasst;
die Übertragungsschaltung konfiguriert ist, um ein digitales Hochgeschwindigkeitsbasisbandsignal in ein digitales Millimeterwellensignal zu modulieren und das digitale Millimeterwellensignal an die elektrische 90 Grad-Brücke mit in einem Substrat integrierten Wellenleiter (2) zu übertragen; und
die Empfangsschaltung konfiguriert ist, um ein digitales Millimeterwellensignal, das von der elektrischen 90 Grad-Brücke mit in einem Substrat integrierten Wellenleiter (2) ausgegeben wird, zu empfangen und das digitale Millimeterwellensignal in ein digitales Hochgeschwindigkeitsbasisbandsignal zu demodulieren.

3. Rotierende Anzeigeeinrichtung basierend auf doppelten zirkular polarisierten bidirektionalen Datenübertragungsmodulen nach Anspruch 2, wobei die Übertragungsschaltung konfiguriert ist, um mittels ASK-Modulation eine Frequenzmischverarbeitung am eingegebenen digitalen Hochgeschwindigkeitsbasisbandsignal durchzuführen, um das digitale Signal auf einen Millimeterwellenträger zu modulieren und das digitale Millimeterwellensignal zu erhalten.

4. Rotierende Anzeigeeinrichtung basierend auf doppelten zirkular polarisierten bidirektionalen Datenübertragungsmodulen nach Anspruch 3, wobei die Übertragungsschaltung konfiguriert ist, um ein eingegebenes differentielles Hochgeschwindigkeitsbasisbandsignal mit einer Übertragungsrate von 0-5 Gbps zu empfangen.

5. Rotierende Anzeigeeinrichtung basierend auf doppelten zirkular polarisierten bidirektionalen Datenübertragungsmodulen nach Anspruch 2, wobei die Empfangsschaltung konfiguriert ist, um eine Demodulierungsverarbeitung am empfangenen digitalen Millimetermodulationssignal durch Erfassung und Vergleich einer inkohärenten Hülle durchzuführen, um das digitale Hochgeschwindigkeitsbasisbandsignal zu erhalten.

6. Rotierende Anzeigeeinrichtung basierend auf doppelten zirkular polarisierten bidirektionalen Datenübertragungsmodulen nach einem der Ansprüche 1 bis 5, wobei das Paar von doppelten zirkular polarisierten bidirektionalen Datenübertragungsmodulen (10, 11) zwei doppelte zirkular polarisierte bidirektionale Datenübertragungsmodule (10, 11) umfasst und die zwei doppelten zirkular polarisierten bidirektionalen Datenübertragungsmodule (10, 11) auf der Grundplatte (20) bzw. der Hauptsteuerplatte (20) eingerichtet sind.

7. Rotierende Anzeigeeinrichtung basierend auf doppelten zirkular polarisierten bidirektionalen Datenübertragungsmodulen nach Anspruch 6, wobei die zwei doppelten zirkular polarisierten bidirektionalen Datenübertragungsmodule (10, 11) eine gleiche Struktur aufweisen.

8. Rotierende Anzeigeeinrichtung basierend auf doppelten zirkular polarisierten bidirektionalen Datenübertragungsmodulen nach Anspruch 6, wobei die elektrische 90 Grad-Brücke mit in einem Substrat integrierten Wellenleiter (2), die im doppelten zirkular polarisierten bidirektionalen Datenübertragungsmodul (10) auf der Grundplatte (20) umfasst ist, auf der Grundlage eines Leiterplattenprozesses auf der Grundplatte (20) integriert ist; und
die elektrische 90 Grad-Brücke mit in einem Substrat integrierten Wellenleiter (2), die im doppelten zirkular polarisierten bidirektionalen Datenübertragungsmodul (11) auf der Hauptsteuerplatte (22) umfasst ist, auf der Grundlage eines Leiterplattenprozesses auf der Hauptsteuerplatte (22) integriert ist.

9. Rotierende Anzeigeeinrichtung basierend auf doppelten zirkular polarisierten bidirektionalen Datenübertragungsmodulen nach einem der Ansprüche 1 bis 8, wobei die elektrische 90 Grad-Brücke mit in einem Substrat integrierten Wellenleiter (2) eine obere und untere Metallschicht (8), eine dielektrische Hochfrequenzplatte (5) und metallisierte Durchgangslöcher (6) umfasst, wobei die obere und untere Metallschicht (8) beide Seiten der dielektrischen Hochfrequenzplatte (5) abdeckt und die metallisierten Durchgangslöcher (6) in einer von der oberen und unteren Metallschicht (8) und der dielektrischen Hochfrequenzplatte (5) gebildeten Gesamtheit bereitgestellt sind.

10. Rotierende Anzeigeeinrichtung basierend auf doppelten zirkular polarisierten bidirektionalen Datenübertragungsmodulen nach einem der Ansprüche 1 bis 9, wobei zwei Anschlüsse der elektrischen 90 Grad-Brücke mit in einem Substrat integrierten Wellenleiter (2) durch Mikrostreifenübertragungsleitungen (7) mit dem Millimeterwellen-Modulations-Demodulations-Transceiver (1) verbunden sind.

11. Rotierende Anzeigeeinrichtung basierend auf doppelten zirkular polarisierten bidirektionalen Datenübertragungsmodulen nach einem der Ansprüche 1 bis 10, wobei offene schmale Spalten (9) an einem Ende der elektrischen 90 Grad-Brücke mit in einem Substrat integrierten Wellenleiter (2) bereitgestellt sind und die offenen schmalen Spalten (9) einen eingeschlossenen Winkel von 90 Grad aufweisen.

12. Rotierende Anzeigeeinrichtung basierend auf doppelten zirkular polarisierten bidirektionalen Datenübertragungsmodulen nach einem der Ansprüche 1 bis 11, wobei die Anregungslücken mit orthogonalem Halbmodenwellenleiter (3) und der zirkular polarisierte Radiator mit kombiniertem Wellenleiter mit orthogonaler Mode (4) eine einstückige Metallstruktur bilden und die Metallstruktur oberhalb der elektrischen 90 Grad-Brücke mit in einem Substrat integrierten Wellenleiter (2) befestigt ist.

13. Rotierende Anzeigeeinrichtung basierend auf doppelten zirkular polarisierten bidirektionalen Datenübertragungsmodulen nach einem der Ansprüche 1 bis 11, wobei die Anregungslücken mit orthogonalem Halbmodenwellenleiter (3) und der zirkular polarisierte Radiator mit kombiniertem Wellenleiter mit orthogonaler Mode (4) eine einstückige Metallstruktur bilden und die Metallstruktur auf einer Leiterplatte gepresst wird, wo sich die elektrische 90 Grad-Brücke mit in einem Substrat integrierten Wellenleiter (2) befindet.

14. Rotierende Anzeigeeinrichtung basierend auf doppelten zirkular polarisierten bidirektionalen Datenübertragungsmodulen nach einem der Ansprüche 1 bis 13, wobei sich der zirkular polarisierte Radiator mit kombiniertem Wellenleiter mit orthogonaler Mode (4) an einem Drehmittelpunkt der rotierenden Anzeigeeinrichtung befindet.

15. Rotierende Anzeigeeinrichtung basierend auf doppelten zirkular polarisierten bidirektionalen Datenübertragungsmodulen nach einem der Ansprüche 1 bis 14, wobei Durchgangslöcher im Motor (21) bereitgestellt sind und das Paar von doppelten zirkular polarisierten bidirektionalen Datenübertragungsmodulen (10, 11) über die Durchgangslöcher durch den Motor (21) gelangen.

## Revendications

1. Appareil d'affichage rotatif basé sur des modules de transmission de données bidirectionnels à polarisation circulaire double, comprenant une carte de base (20), un moteur (21), une carte de commande principale (22) et une carte d'éclairage LED (23), dans lequel une paire de modules de transmission de données bidirectionnels à polarisation circulaire double (10, 11) sont agencés sur la carte de base (20) et la carte de commande principale (22), et chacun des modules de transmission de données bidirectionnels à polarisation circulaire double (10, 11) comprend un émetteur-récepteur de modulation-démodulation d'ondes millimétriques (1), un pont électrique à 90 degrés de guide d'ondes intégré à un substrat (2), des espaces d'excitation de guide d'ondes en demi-mode orthogonal (3), et un élément rayonnant à polarisation circulaire de guide d'ondes combiné en mode orthogonal (4) ; et
le pont électrique à 90 degrés de guide d'ondes intégré à un substrat (2) est raccordé à l'émetteur-récepteur de modulation-démodulation d'ondes millimétriques (1), les espaces d'excitation de guide d'ondes en demi-mode orthogonal (3) sont raccordés au pont électrique à 90 degrés de guide d'ondes intégré à un substrat (2), et l'élément rayonnant à polarisation circulaire de guide d'ondes combiné en mode orthogonal (4) est raccordé aux espaces d'excitation de guide d'ondes en demi-mode orthogonal (3).

2. Appareil d'affichage rotatif basé sur des modules de transmission de données bidirectionnels à polarisation circulaire double selon la revendication 1, dans lequel l'émetteur-récepteur de modulation-démodulation d'ondes millimétriques (1) comprend un circuit de transmission et un circuit de réception ;
le circuit de transmission est configuré pour moduler un signal numérique en bande de base à grande vitesse en un signal numérique à ondes millimétriques et transmettre le signal numérique à ondes millimétriques au pont électrique à 90 degrés à guide d'ondes intégré à un substrat (2) ; et
le circuit de réception est configuré pour recevoir un signal numérique à ondes millimétriques produit par le pont électrique à 90 degrés à guide d'ondes intégré à un substrat (2) et démoduler le signal numérique à ondes millimétriques en un signal numérique en bande de base à grande vitesse.

3. Appareil d'affichage rotatif basé sur des modules de transmission de données bidirectionnels à polarisation circulaire double selon la revendication 2, dans lequel le circuit de transmission est configuré pour effectuer un traitement de mélange de fréquences sur le signal numérique en bande de base à grande vitesse d'entrée au moyen d'une modulation ASK, de manière à moduler le signal numérique sur une porteuse d'ondes millimétriques pour obtenir le signal numérique à ondes millimétriques.

4. Appareil d'affichage rotatif basé sur des modules de transmission de données bidirectionnels à polarisation circulaire double selon la revendication 3, dans lequel le circuit de transmission est configuré pour recevoir un signal numérique différentiel en bande de base à grande vitesse d'entrée avec un taux de transmission de 0 à 5 Gbps.

5. Appareil d'affichage rotatif basé sur des modules de transmission de données bidirectionnels à polarisation circulaire double selon la revendication 2, dans lequel le circuit de réception est configuré pour effectuer un traitement de démodulation sur le signal de modulation numérique à ondes millimétriques reçu par détection et comparaison d'enveloppe incohérente, de manière à obtenir le signal numérique en bande de base à grande vitesse.

6. Appareil d'affichage rotatif basé sur des modules de transmission de données bidirectionnels à polarisation circulaire double selon l'une quelconque des revendications 1 à 5, dans lequel la paire de modules de transmission de données bidirectionnels à polarisation circulaire double (10, 11) comprend deux modules de transmission de données bidirectionnels à polarisation circulaire double (10, 11), et les deux modules de transmission de données bidirectionnels à polarisation circulaire double (10, 11) sont agencés sur la carte de base (20) et la carte de commande principale (20) respectivement.

7. Appareil d'affichage rotatif basé sur des modules de transmission de données bidirectionnels à polarisation circulaire double selon la revendication 6, dans lequel les deux modules de transmission de données bidirectionnels à polarisation circulaire double (10, 11) ont la même structure.

8. Appareil d'affichage rotatif basé sur des modules de transmission de données bidirectionnels à polarisation circulaire double selon la revendication 6, dans lequel le pont électrique à 90 degrés de guide d'ondes intégré à un substrat (2) compris dans le module de transmission de données bidirectionnel à polarisation circulaire double (10) sur la carte de base (20) est intégré sur la carte de base (20) sur la base d'un processus de carte de circuit imprimé ; et
le pont électrique à 90 degrés de guide d'ondes intégré à un substrat (2) compris dans le module de transmission de données bidirectionnel à polarisation circulaire double (11) sur la carte de commande principale (22) est intégré sur la carte de commande principale (22) sur la base d'un processus de carte de circuit imprimé.

9. Appareil d'affichage rotatif basé sur des modules de transmission de données bidirectionnels à polarisation circulaire double selon l'une quelconque des revendications 1 à 8, dans lequel le pont électrique à 90 degrés de guide d'ondes intégré à un substrat (2) comprend un métal à couche supérieure et inférieure (8), une dalle diélectrique à haute fréquence (5), et des trous traversants métallisés (6), le métal à couche supérieure et inférieure (8) couvre les deux côtés de la dalle diélectrique à haute fréquence (5), et les trous traversants métallisés (6) sont prévus dans un ensemble formé par le métal à couche supérieure et inférieure (8) et la dalle diélectrique à haute fréquence (5).

10. Appareil d'affichage rotatif basé sur des modules de transmission de données bidirectionnels à polarisation circulaire double selon l'une quelconque des revendications 1 à 9, dans lequel deux ports du pont électrique à 90 degrés de guide d'ondes intégré à un substrat (2) sont raccordés à l'émetteur-récepteur de modulation-démodulation d'ondes millimétriques (1) par l'intermédiaire de lignes de transmission microruban (7).

11. Appareil d'affichage rotatif basé sur des modules de transmission de données bidirectionnels à polarisation circulaire double selon l'une quelconque des revendications 1 à 10, dans lequel des espaces étroits ouverts (9) sont prévus à une extrémité du pont électrique à 90 degrés de guide d'ondes intégré à un substrat (2), et les espaces étroits ouverts (9) présentent un angle inclus de 90 degrés.

12. Appareil d'affichage rotatif basé sur des modules de transmission de données bidirectionnels à polarisation circulaire double selon l'une quelconque des revendications 1 à 11, dans lequel les espaces d'excitation de guide d'ondes en demi-mode orthogonal (3) et l'élément rayonnant à polarisation circulaire de guide d'ondes combiné en mode orthogonal (4) forment une structure métallique intégrée, et la structure métallique est fixée au-dessus du pont électrique à 90 degrés de guide d'ondes intégré à un substrat (2).

13. Appareil d'affichage rotatif basé sur des modules de transmission de données bidirectionnels à polarisation circulaire double selon l'une quelconque des revendications 1 à 11, dans lequel les espaces d'excitation de guide d'ondes en demi-mode orthogonal (3) et l'élément rayonnant à polarisation circulaire de guide d'ondes combiné en mode orthogonal (4) forment une structure métallique intégrée, et la structure métallique est pressée sur une carte de circuit imprimé où le pont électrique à 90 degrés de guide d'ondes intégré à un substrat (2) est situé.

14. Appareil d'affichage rotatif basé sur des modules de transmission de données bidirectionnels à polarisation circulaire double selon l'une quelconque des revendications 1 à 13, dans lequel l'élément rayonnant à polarisation circulaire de guide d'ondes combiné en mode orthogonal (4) est situé au niveau d'un centre de rotation de l'appareil d'affichage rotatif.

15. Appareil d'affichage rotatif basé sur des modules de transmission de données bidirectionnels à polarisation circulaire double selon l'une quelconque des revendications 1 à 14, dans lequel des trous traversants sont prévus dans le moteur (21), et la paire de modules de transmission de données bidirectionnels à polarisation circulaire double (10, 11) passent à travers le moteur (21) par l'intermédiaire des trous traversants.
